Europäisches Patentamt

(19) European Patent Office

Office européen des brevets

(11) Publication number: 0 348 624
A2

# EUROPEAN PATENT APPLICATION

(21) Application number: 89107162.3

(51) Int. Cl.4: G01N 27/82

(22) Date of filing: 20.04.89

(30) Priority: 28.06.88 US 212565

(43) Date of publication of application:
03.01.90 Bulletin 90/01

(84) Designated Contracting States:
AT BE CH DE ES FR GB GR IT LI LU NL SE

(71) Applicant: BALL CORPORATION
345 South High Street
Muncie Indiana 47302(US)

(72) Inventor: Long, Eugene Carl
869 Bluebird Lane
Lafayette Colorado 80026(US)
Inventor: Kubitschek, James Edward
9532 Dudley Drive
Westminster Colorado 80020(US)

(74) Representative: Wagner, Karl H. et al
WAGNER & GEYER Patentanwälte
Gewürzmühlstrasse 5 Postfach 246
D-8000 München 22(DE)

(54) Method and apparatus for the detection of misformed curls in can ends.

(57) A method and apparatus for the detection of misformed curls in can ends and other closures utilizing a magnetic sensor located above the rotating edge of the can end for generating first and second electrical signals. The first electrical signal indicates that the portion of the rim of the closure is of normal configuration and the second electrical signal indicates that the portion of the rim deviates from the normal configuration thereby indicating a misformed curl. The second signal also indicates the size of the misformed curl and can be set so as to reject can ends having misformed curls greater than a predetermined size.

EP 0 348 624 A2

# METHOD AND APPARATUS FOR THE DETECTION OF MISFORMED CURLS IN CAN ENDS

## BACKGROUND OF THE INVENTION

### 1. Field of the Invention

The field of the invention is detectors for determining defects in manufactured objects and, more particularly, the field of the invention pertains to the use of detectors, such as magnetic detectors, to detect misformed curls in mass production can ends such as found in consumer food cans.

### 2. Statement of the Problem

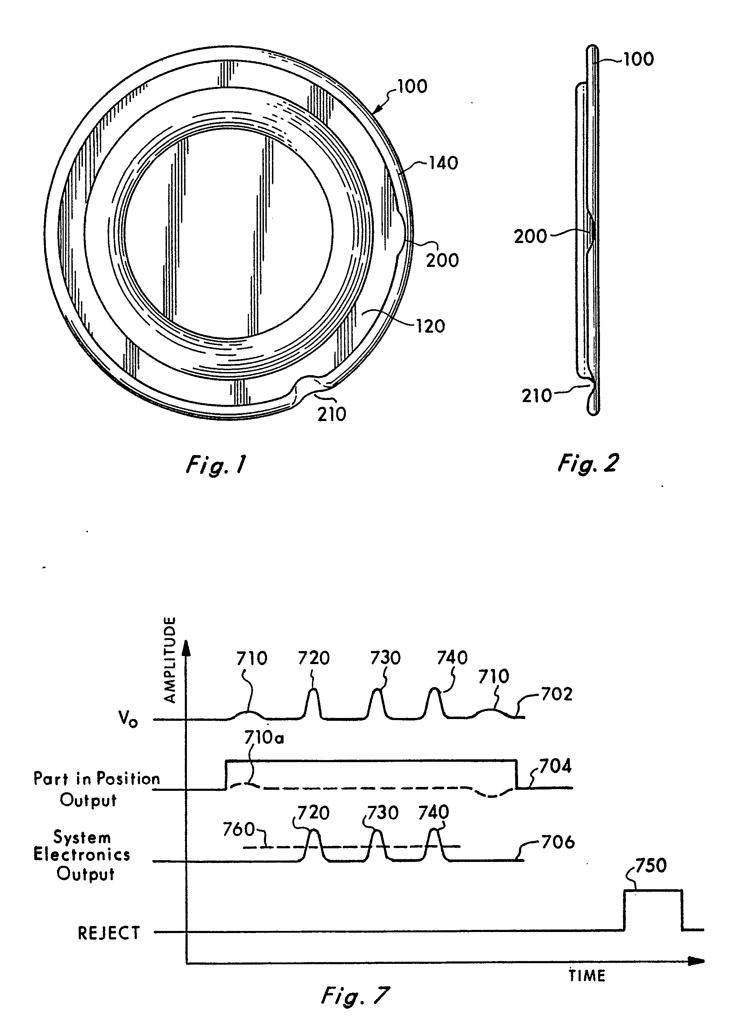

A conventional can end 100 is shown in Figures 1 and 2. Can ends and other closures 100 form the top and bottom portion of conventional can configurations used for the storage of consumer food or the like. Unfortunately, when can ends are punched out of sheets by a multiple die punch press, one of the problems that can occur is a misalignment of the uncut sheet material, which causes a portion of an end to be missing. This missing portion is termed a "misformed curl." In Figures 1 and 2, the misformed curl is shown as item 200. A misformed curl may also be a defect which deforms the end such as a portion of an end bent inwardly as shown by item 210 in Figure 1 and 2.

The presence of a misformed curl 200 or 210, if of a sufficient size, in a can end 100 when fully assembled with the remainder of the can, may cause the can to leak and the possible spoilage of the food or substance contained therein. Under present manufacturing processes, misformed curls 200 and 210 are visually detected by human operators. Such visual inspection may result in approximately eighty percent of the misformed curls being detected with the remaining twenty percent being undetected.

A problem exists in the manufacturing of objects such as can ends and other closures involving misformed curls in that the current process of manual visual inspection of manufactured can ends does not fully detect the presence of all misformed curls in a can end or closure. A need exists to automate this process and to eliminate human error in the detection process.

### 3. Solution to the Problem

The present invention solves this problem by providing a fully automated method and apparatus that performs one hundred percent inspection of defects in objects such as misformed curls in manufactured can ends at a predetermined size level of misformed curl acceptance. The present invention uses a magnetic detector to ascertain the presence and relative size of a misformed curl in a can end and then issues a reject signal for can ends having a misformed curl greater than a predetermined size.

### 4. Results of a Patent Search

A search of prior patents for devices for detecting misformed curls in can ends uncovered the following:

| Inventor | Patent No. | Issue Date |
|---|---|---|
| Caples et al. | 2,785,592 | 3-19-57 |
| Vanator | 2,983,141 | 5-9-61 |
| Vanator | 3,231,813 | 1-25-66 |
| Bolton | 3,697,745 | 10-10-72 |
| Tauji et al. | 4,004,693 | 1-25-77 |
| Kawabata et al. | 4,288,747 | 9-8-81 |
| de Sivry et al. | 4,485,344 | 11-27-84 |
| Bartlett | 4,580,097 | 4-1-86 |
| Hoffman | 4,608,564 | 8-26-86 |

None of the above patents set forth either a method or an apparatus for detecting misformed curls in can ends.

The two Vanator patents disclose a gear tooth inspection apparatus used to automatically detect dimensional irregularities such as eccentricity or wobble in gear wheels. Vanator utilizes two radially directed magnetic pickups closely spaced to a rotating gear under inspection. The pickups use coils wound on permanent bar magnets. The gear in association with each magnetic pickup forms a separate magnetic circuit. Vanator measures a differential between two sensors and the phase amplitude correspondence.

The Tsuji patent discloses an automated apparatus for rotating a tire for inspection and utilizing a pair of opposing detectors having a primary coil and a secondary coil wound on a iron core. As the tires rotate between the two detectors, any abnormally spaced apart steel ply cords in the tire will be detected. Tsuji detects DC variations in his magnetic sensor.

The remaining patents are not as close to the teachings of the present invention as those set forth above. Caples uses magnetic sensors to position a tool in the X and Y axis. Hoffman uses inductive coupling between two windings to sense the rotation of a rotating perforated disk. The Bartlett patent uses an oscillating circuit which shows a decrease in the gain of oscillations when a part is present. Bolton teaches the use of three AC driven coils magnetically coupled to detect the presence or absence of a railroad train wheel. The Kawabata reference uses a number of eddy current sensors to measure the contour of an object placed perpendicular to the reference line of the sensors.

None of the patents uncovered in the search set forth any apparatus or method for detecting misformed curls in can ends or similar articles.

## SUMMARY OF THE INVENTION

The apparatus of the present invention includes a means for rotating each can end on its rotational axis, providing a sensor located above the rotating edge of the can end for generating electrical signals. The sensor, for example a single pole half toroid, has one of its ends oriented above the rotating edge. The rotating edge and the air gap between the rotating edge and the pole end of the magnetic sensor completes the magnetic path of the sensor so that the sensor is capable of generating a signal when a misformed curl in the can end occurs. Upon the detection of an electrical signal, a reject signal is generated indicating that the can end being rotated has an undesired misformed curl present.

Under the method of the present invention and in a typical manufacturing process, a plurality of can ends are individually raised by a reciprocating liner mechanism to treat the can end with a sealant. This conventional manufacturing step is modified under the teachings of the present invention so that as each unlined can end is loaded onto the rotating chuck of the mechanism it is raised by the rotating chuck to an upper position wherein the sealant is applied to line the can end. In this position, the magnetic sensor of the present invention detects the presence of any misformed curls in the raised rotating can end while the sealant is being applied. Upon completion the lined can end is lowered and if a misformed curl was detected it is rejected.

In contrast to the prior patented approaches discussed above, the present invention, in order to retrofit to the conventional reciprocating liner mechanism, uses only one sensor which is direct current driven to produce a signal based upon variations in the air gap between the sensor and the can end. The amplitude of the signal not only conveys the existence of a misformed curl but also the depth of the misformed curl. The present invention can be adjusted to reject misformed curls of a certain size or greater. Finally, the present invention is designed to operate at the high speeds found in manufacturing of can ends.

## BRIEF DESCRIPTION OF THE DRAWING

FIGURE 1 is a top planar view of a can end with two misformed curls;

FIGURE 2 is a side view of the can end of Figure 1;

FIGURE 3 is an illustration of the misformed curl detector of the present invention mounted into a reciprocating liner mechanism;

FIGURE 4 sets forth the circuit details of the magnetic sensor of the present invention;

FIGURE 5 sets forth the schematic of the electronics of the present invention;

FIGURES 6A through 6E shows the operation of the present invention in conjunction with the operation of the reciprocating liner mechanism; and

FIGURE 7 illustrates the signals produced by the system of the present invention.

## DESCRIPTION OF THE PREFERRED EMBODIMENT

In Figures 1 and 2, a conventional can end or closure 100 is shown containing misformed curls 200 and 210 in the lip or rim 140. The misformed curls 200 and 210 may be of various sizes and, if a misformed curl is small enough, it may still be entirely safe for use by a manufacturer. The present invention permits the operator of the present invention to select the particular size of misformed curl for acceptability and to reject misformed curls larger than that size. Other defects in the can end or closure 100 are detected in the same manner.

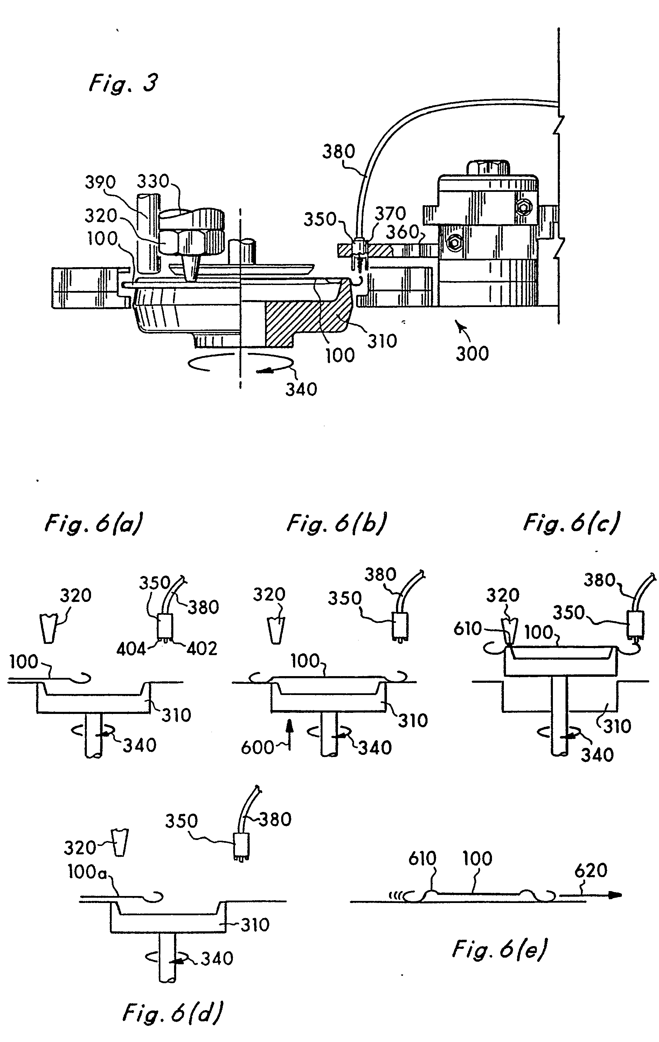

In Figure 3, the can end 100 is shown in a conventional reciprocating liner mechanism 300. The reciprocating liner mechanism 300 includes a rotating chuck 310 and an application nozzle 320 to which a supply of sealant 330 is provided. In Figure 3, the rotating chuck 310 has lifted a can end 100 into position wherein the rotation of the end in the direction of arrow 340 causes sealant to be applied around the edge 120 of the lip 140 as shown in Figure 1. The can end 100 typically rotates under the application nozzle 320 for three complete revolutions and then is lowered by chuck 310 and pushed off the rotating chuck by two "pusher" arms, not shown. A new can end is then placed on the rotating chuck and the process is repeated.

The magnetic sensor 350 of the present invention is mounted by means of a mounting bracket 360 to the reciprocating liner mechanism 300. The sensor 350 is contained in a housing 370 from which a cable 380 carries signals from the sensor 350 away from the liner mechanism 300 to a remote point. It is to be expressly understood that the preferred embodiment shows detection of the misformed curl by magnetic means but that other means such as, for example, eddy currents could be used depending upon the material used in the closure or can end. Other configurations could include straight line or linear motion going past the sensor rather than the rotary motion set forth above. An example might be the inspection by a detector of the present invention of a linear weld seam for cavities or pits in the surface passing under the detector. The sensor, therefore, may be DC driven, AC driven, AC eddy current driven and the relative motion of the object past the sensor could be rotating motion or linear motion.

It can be observed, that the detection of the misformed curl, according to the teachings of the present invention, does not interfere with the conventional manufacturing lining process for the can end. Rather, the misformed curl detection occurs simultaneously with the application of the sealant and represents a modification to the reciprocating liner mechanism. At the same time the sealant is placed on the can end, misformed curl detection occurs. It is to be expressly understood that any device that effectuates relative movement between the rim 120 and the sensor 350 could be used under the teachings of the present invention.

As the ends are being manufactured, magnets are used to transport and control the steel ends. These magnets cause each end to have a randomly oriented, varying residual magnetism induced in the end curl. In Figure 3, a permanent magnet 390 is added to the reciprocating liner to insure a uniform magnetic field in the curl of the end. The magnet 390 is mounted right over the curl so when the rotating chuck 310 raises the end to the sensor 350 and the permanent magnet 390, a uniform field is created by the magnet 390 as the curl rotates under the magnet 390. In other applications where no varying magnetism is introduced in the part to be inspected, the magnet 390 would not be required.

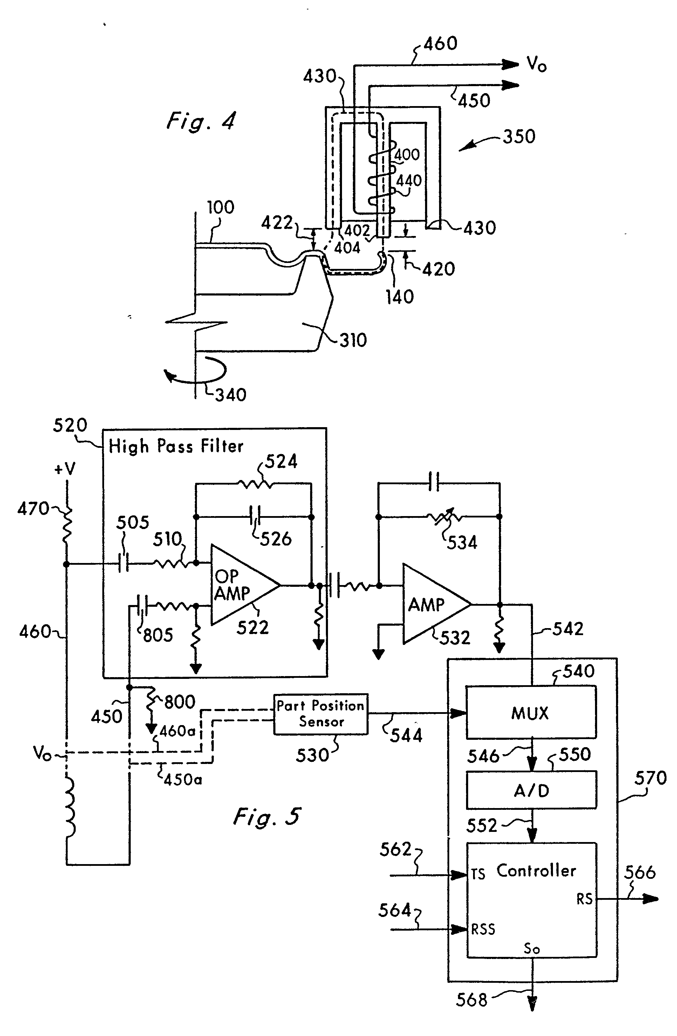

The details of the magnetic sensor 350 are shown in Figure 4. As shown, the magnetic sensor 350 has a center pole 400 inside an opposing inverted metal cup 430 extending downwardly and outwardly from the magnetic sensor 350. Housing 350 is of conventional design. The opposing end 402 is disposed above the rotating edge 140 of the can end 200 so that an air gap 420 exists between the opposing end 402 and the

4

rotating edge 140. The air gap separation 420 may be between 0.01 to 0.15 inches with the ability of the sensor to detect a 0.01 inch misformed curl. A second air gap 422 exists between sensor end 404 and can end 100.

A magnetic path shown by dotted line 430 is created with the core 400, the air gap 420, the rotating edge 140, the air gap 422 and the cup side of sensor 430.

As shown in Figure 4, the can end 100 is held by the rotating chuck 310 to rotate the can end 100 in the rotational axis of the can end 100 as shown by arrow 340.

The half toroid core 400 has a coil 440 wrapped around it. The ends 450 and 460 of the coil 440 are taken a high pass filter 520 input as shown in Figure 5. Each coil end 450 and 460 goes to a balanced differential amplifier 522 input. End 460 is delivered through resistor 470 to positive DC voltage and through capacitor 505 to an operational amplifier 522. Capacitor 505 blocks any DC signal, extending only the AC signal from the coil 440. End 450 goes to the same value components (800 and 805) except resistor 800 goes to ground instead of DC positive voltage. Capacitor 805 blocks any DC signal. This configuration prevents external noise coupled to both lines 450 and 460 from being amplified by amplifier 522. The operational amplifier is preferably available from National Semiconductor as Part LM124.

The following equation applies to a magnetic circuit with an air gap.

$$N \times I = (R_g \times \emptyset_g) + (R_t \times \emptyset_t) \qquad \textbf{FORMULA 1}$$

Where:

$N$ = the number of turns on the half toroid

$I$ = the current in the winding

$R_g$ = the reluctance of the air gap

$\emptyset_g$ = the flux in the air gap

$R_t$ = the reluctance of the core material

$\emptyset_t$ = the flux in the core material

Reluctance is inversely proportional to the length of the air gap and inductance is directly proportional to the flux. Therefore, the equation for the inductance of the core and air gap is:

$$L = N^2 / (R_g + R_t) \qquad \textbf{FORMULA 2}$$

Where:

$L$ = Inductance

Because the reluctance, $R_g$, changes when a misformed curl passes the sensor (i.e., the air gap 420 becomes greater), the inductance will also vary; this change in inductance is what is measured by the remaining circuitry.

Using electronic circuit analysis for the voltage output, $V_0$, shown in Figure 4 gives the following:

$$V_0 = V_1 (r/((r_1 + r)) + (r_1/(r_1 + r)) \times e^{-tr/L} \qquad \textbf{FORMULA 3}$$

Where:

$t$ = time

$r$ = series resistance

$r_1$ = inductance resistance

$L$ = the sensor inductance which varies with the misformed curl depth

Based upon Formulas 1 through 3, the coil 440, under the teachings of the present invention, utilizes 500 turns of wire to give a signal $V_0$ which can be amplified by the electronics.

Figure 5 shows the remaining portion of the electronic system of the present invention. The electronic system circuitry may be remotely located from the sensor outputs on lines 450 and 460.

In Figure 5, the differential amplifier 522 of the high pass filter 520 receives the sensor's output signal on leads 450 and 460. The circuitry amplifies and shapes the sensor output signal so it can be analyzed by the controller. Amplifier 522 and the resistors and capacitors used with it form the bandpass of the system. Resistor 510 and capacitor 505 limit the low frequency for the circuit while resistor 524 and capacitor 526 limit the high frequency for the circuit and functions, therefore, as a high pass filter. Amplifier 532 (also a Part No. LM124) is a simple A-C coupled, broad-band pass amplifier used to adjust the total system gain by adjusting resistor 534. The remaining resistors and capacitors around the amplifier 532 function to make it a broad-band A-C coupled amplifier.

Typically, the normal operation for the sealant application by the reciprocating liner mechanism 300 is 325 ends per minute or about 185 milliseconds per can end. The can end turns about three times during every liner cycle and takes about 28 ms per revolution. The high pass filter (524 and 526) has a time constant of TC1 which is selected to be about one thousandths of a revolution or approximately 33 microseconds, so that only the sudden changes in the air gap 420 caused by misformed curls are detected.

The output of the broad-band amplifier 532 is delivered into a multiplexer 540 over line 542 and the output of the "part in position" sensor 530 is delivered into the multiplexer over line 544. The multiplexer is

5

a part of a conventional integrated circuit 570 from Motorola as Part No. MC68705R5S. The multiplexer 540 becomes activated over line 544 by the first signal from the part in position sensor 530 which indicates that the can end is in place and ready for inspection. After a short delay, the multiplexer 540 switches to monitor the signals on line 542 from the high pass filter 522 indicative of a misformed curl. Since the high pass filter 520 does not pass any lower frequencies, all wow or flutter at the end of the chuck 310 is eliminated.

The electrical signal from the part in position sensor 530 over line 544 indicates the presence of a rotating can end being in position ready for testing as shown in Figure 4. This sensor can be any conventional sensor including actual control signals from the mechanism 300 or being generated from leads 450 and 460 as shown by the dotted lines 450a and 460a as shown in Figure 5. In this case, the part in position sensor 530 could be a filter circuit sensing the presence of the magnetic path 430.

If the rotating chuck 310 were out of position, the signal on line 544 would not be generated and the multiplexer 540 would be essentially turned off. The electrical signal delivered over lead 542 from the broad-band amplifier 532 indicates the presence of a misformed curl in the can end and the amplitude of the signal is proportional to the size and depth of the misformed curl. The output of the multiplexer is delivered over lead 546 to an analog to digital converter 550 which converts the detected analog signals to a digital value for delivery over lead 552 to a controller circuit 560.

The controller 560 has a threshold setting (TS) 562 which allows the operator of the apparatus of the present invention to preset acceptable or non-acceptable levels for the size of the defect. For example, misformed curls of a certain size or less may be acceptable in the manufacturing process and the threshold setting over lead 562 can be adjusted to satisfy the production needs. In the preferred embodiment, there are 27 selection levels, each higher level accepting a larger defect. Each level is proportional to (not equal to) the defect size.

The reject signal (RS) is delivered over lead 566 and it functions to activate an electropneumatic solenoid, not shown. The solenoid is attached to an arm, different at each installation, which removes the defective end from the production line. The controller 560 in the presence of a rotating can end 100 generates a reject signal over lead 566 when a misformed curl 200 is detected. Likewise, controller 560 can also provide statistical output (SO) information over lead 568 which keeps track of the number of defective ends being detected in a manufacturing run. The statistical information in controller 560 is rest over line 564 by an external reset (RSS) activated by the operator of the present invention.

Figures 6(a) through 6(d) show the sequence of one cycle of the apparatus of the present invention operating in conjunction with the reciprocating liner mechanism 300 of Figure 3. In Figure 6(a), the unlined can end 100 is loaded onto a rotating chuck 310 being rotated in the direction of arrow 340. The rotating chuck 310 is then lifted in the direction of arrow 600 as shown in Figure 6(b) until it achieves the position shown in Figure 6(c). In this upper position, as shown in Figure 6(c), sealant 610 is delivered through the application nozzle 320 onto the surface of the rotating can end 100. Simultaneously, the part in position sensor 530 generates an electrical signal on lead 544 which indicates the presence of the end 100 in position for inspection. If a misformed curl 200 or 210 is on the end 100, a signal is generated on lead 542 indicating the presence and relative size of a misformed curl. As mentioned, three complete revolutions occur when the rotating chuck 310 is in the position shown in Figure 6(c). After one revolution, two complete revolutions occur during the application of the sealant 610 to the can end 100. The can end 100 is now lined with the sealant 610. The chuck 310 is lowered and in Figure 6(d), the previously lined can end 100 is removed from the chuck 310 and a new unlined can end 100 is moved over chuck 310. In Figure 6-(e), a rejected end is moved off the assembly line as shown by arrow 620. If the end does not contain any misformed curls or only contains misformed curls smaller than the predetermined level as set by threshold settings at 562, then the can end is acceptable and continues in the manufacturing line.

In Figure 7 is shown the electrical signals produced by the apparatus of the present invention. The differential output voltage, $V_0$, from the DC driven sensor 350 is shown as $V_0$. Keep in mind, that only the AC components of the signal are transmitted through capacitor 505 and 805 of Figure 5. The presence of a misformed curl is shown by signals 720, 730 and 740. The can end 100, in the example shown in Figure 7 for $V_0$ has only one misformed curl, but the can end is rotated three times during inspection resulting in three pulses 720, 730 and 740. The output 704 of the part in position sensor 530 shows the digital output of that sensor which remains "high" until the part 100 is lowered. Likewise, the output 706 of the system electronics is shown preserving only pulses 720, 730, and 740. If the amplitude of the pulses 720, 730, and 740 exceed a predetermined value 760 as set by 562, then a reject signal 750 is issued and appears on 566. If the amplitude is below that level 760 no reject signal is issued. The amplitude of the signals 720, 730, and 740 are proportional to the size and depth of the misformed curl. In response to the presence of both the part present signal 704 and the high pass signals 706, the controller 560 functions to issue a reject signal 750.

In Figure 7, curves 710 result when the part 100 is raised to the sensor 350 to complete the magnetic path 430. This creates an initial reading. When part 100 is lowered a similar curve 710 is created. These are lower than the threshold 760, but could be used by the sensor 530 as shown by curves 710a to sense the position of the part. It is to be expressly understood that any suitable position sensor could be used according to the teachings of the present invention.

The method of the above invention can be summarized as follows. The method detects misformed curls 200 in the rim 140 of a closure 100 wherein relative movement occurs between the closure 100 and the sensor 350. A uniform magnetic field is applied by magnet 390 to overcome randomly oriented, varying residual magnetism. The sensor then senses the surface of the closure rim 140 around its periphery. If the periphery contains a misformed curl, the permeability of the core is changed and an electrical signal is generated. When the signal is generated, exceeding a predetermined value, the closure is rejected. The apparatus and method of the present invention can be suitably adapted to detect defects in any desired objects. For example, a linear weld seam having undesirable defects such as pits can be moved past the magnetic sensor of the present invention and be detected.

While preferred embodiments of the present invention have been shown, it is to be expressly understood that modifications and changes may be made thereto and that the present invention is set forth in the following claims.

## Claims

1. An apparatus for detecting misformed curls in a closure, said apparatus comprising:
means holding said closure for rotating said closure on its rotational axis,
a magnetic sensor located above the rotating edge of said closure for electrical signals, said sensor having a magnetic core oriented above said rotating edge of said closure wherein said rotating edge and the air gaps between (a) said rotating edge and the end of said pole and (b) the end of said sensor completes the magnetic path of said magnetic core, said magnetic sensor generating an electrical signal when a misformed curl in said closure changes the permeability of said core, and
means receptive of said signals from said magnetic sensor for producing a reject signal for said closure when said closure contains at least one misformed curl.

2. The apparatus of Claim 1 wherein said producing means comprises means receptive of said electrical signal for producing said reject signal only when said signal exceeds a predetermined threshold level.

3. The apparatus of Claim 1 wherein said producing means comprises:
a high pass filter receptive of said signals for amplifying only said electrical signal,
a multiplexer connected to receive said amplified signal from said amplifying means, and
an analog to digital converter receptive of said extended signals for converting said signal from an analog signal to a digital signal.

4. The apparatus of Claim 1 further comprising means located near said closure for adding a uniform magnetic field to said closure in order to overcome any randomly oriented, varying residual magnetism in said closure.

5. A method of detecting defects in an object comprising the steps of:
positioning said object and a detecting device adjacent one another with the detecting device located so as to sense the surface of the object,
effecting relative movement between the surface of the object and the detecting device,
adding a uniform magnetic field to the object in order to overcome any randomly oriented, varying residual magnetism in said closure,
magnetically sensing with the detecting device the surface of the object during the relative movement and in response to the step of adding a uniform magnetic field,
generating an electrical signal from a defect on the surface of the object which causes the surface to deviate from its normal configuration in response to the step of magnetically sensing the surface, and
rejecting the object having a defect in response to the step of generating an electrical signal.

6. The method of Claim 5 wherein the relative movement is linear.

7. The method of Claim 5 wherein the relative movement is rotational.

Fig. 1

Fig. 2

Fig. 7

Fig. 3

Fig. 6(a)

Fig. 6(b)

Fig. 6(c)

Fig. 6(d)

Fig. 6(e)

*Fig. 4*

*Fig. 5*